# EUROPEAN PATENT SPECIFICATION

(11) **EP 3 270 650 B1**
(45) Date of publication and mention of the grant of the patent: **10.11.2021**
(21) Application number: 16761259.7
(22) Date of filing: 25.02.2016
(51) Int. Cl.: H04W 72/04, H04J 1/00, H04W 8/20, H04L 5/00, H04W 28/16, H04W 48/02, H04W 16/32, H04W 88/08, H04W 60/00, H04W 8/22, H04W 8/04, H04W 36/00

(54) **COMMUNICATION SYSTEM, BASE STATION AND FREQUENCY BAND CONTROL METHOD**
KOMMUNIKATIONSSYSTEM, BASISSTATION UND FREQUENZBANDSTEUERUNGSVERFAHREN
SYSTÈME DE COMMUNICATION, STATION DE BASE, ET PROCÉDÉ DE COMMANDE DE BANDE DE FRÉQUENCE

(30) Priority: 11.03.2015 JP 2015048210
(43) Date of publication of application: 17.01.2018
(60) Divisional application: 21173421.5
(73) Proprietor: NEC Corporation, Tokyo 108-8001 (JP)
(72) Inventor: SUZUKI, Naoaki, Tokyo 108-8001 (JP); WATANABE, Kazuo, Tokyo 108-8001 (JP); FUKUI, Keiji, Tokyo 108-8001 (JP); TAMURA, Toshiyuki, Tokyo 108-8001 (JP)
(74) Representative: MacDougall, Alan John Shaw
(86) International application number: PCT/JP2016/001010
(87) International publication number: WO 2016/143281

(56) References cited:
- WO-A1-2010/126105
- GB-A- 2 493 715
- JP-A- 2014 049 956
- JP-A- 2014 525 693
- US-A1- 2012 044 910
- US-A1- 2013 016 690
- ERICSSON: "Signalling of UE-supported Band Combinations", 3GPP DRAFT; R2-141494 - UE BAND COMBINATION CAPABILITY SIGNALLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG2, no. Valencia, Spain; 20140331 - 20140404 22 March 2014 (2014-03-22), XP050792663, Retrieved from the Internet: URL:http://www.3gpp.org/ftp/Meetings_3GPP_ SYNC/RAN2/Docs/ [retrieved on 2014-03-22]
- QUALCOMM INCORPORATED: "Support for Multiple Serving Cells in LPP", 3GPP DRAFT; R2-120768, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dresden, Germany; 20120206 - 20120210, 30 January 2012 (2012-01-30), XP050565200, [retrieved on 2012-01-30]
- ERICSSON: 'Signalling of UE-supported Band Combinations' 3GPP TSG-RAN WG2#85BIS, R2-141494 31 March 2014, XP050792663

## Description

### Technical Field

The present invention relates to a communication system, a network device, a base station, a mobile station, a frequency band control method and a program and, particularly, relates to a communication system, a network device, a base station, a frequency band control method, a frequency band determination method and a program using a plurality of frequency bands.

### Background Art

With the proliferation of smartphones, services using a large volume of data such as video viewing are being provided to users today. In order to send a large volume of data to smartphones at high speed, carrier aggregation is used. The carrier aggregation is the communication standard defined in the 3GPP (3rd Generation Partnership project) TS36.101 V12.6.0, clause 5.6A (2014-12). The carrier aggregation is a technique to achieve high-speed communications by ensuring a wide band using frequencies in different frequency bands such as, for example, the 800MHz frequency band and the 2GHz frequency band.

Non Patent Literature 1 discloses the carrier aggregation between a UE (User Equipment) and an eNB (evolved NodeB). The UE is used as a general term for mobile stations in the 3GPP. The eNB is a base station that uses LTE (Long Term Evolution), which is the wireless communication standard defined in the 3GPP.

Patent Literature 1 discloses controlling the carrier aggregation operation by exchanging information between a terminal device and a base station device.

### Citation List

### Patent Literature

PTL1: Japanese Unexamined Patent Application Publication No. 2013-229943
PTL2: US 2013/016690 A1 describes a method for a terminal capable of aggregating multiple carriers to perform measurement to the carriers efficiently in a mobile communication system.
PTL3: GB 2 493 715 A describes a communication system with a base station which operates each of a plurality of cells using a respective component carrier. An access control procedure is initiated to determine for each cell whether the configuration should be allowed by transmitting a message to a communication entity. Handover procedures are also disclosed.
PTL4: US 2012/044910 A1 discloses a base station which uses either a plurality of component carriers individually or an aggregate carrier which is an aggregate of the plurality of component carriers to carry out radio communications with a mobile terminal corresponding to the component carrier to the aggregate carrier.

### Non Patent Literature

NPL1: 3GPP TS 36.300 V12.4.0 (2014-12) 3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2, clauses 5.5, 7.5 (Release 12)
NPL2: 3GPP TGG-RAN WG2 #85bis, Tdoc R2-141494 (2014) 3rd Generation Partnership Project; Signalling of UE-Supported Band Combination discloses a discussion of the problem of the existing limit of 128 band combinations in UE EUTRA capability signalling.
NPL3: 3gPP SG-RAN WG2 Meeting #77, R2-120768 (2012) 3rd Generation Partnership Project; Support for Multiple Serving Cells in LPP discloses adding support for indication of multiple serving cells of a target in LPP messages.

### Technical Problem

Non Patent Literature 1 and Patent Literature 1 describe that an eNB or a base station device (hereinafter referred to collectively as "eNB etc.") determines a frequency band or the like to be used in the carrier aggregation. Thus, in the case where a UE or a terminal device (hereinafter referred to collectively as "UE etc.") is a device to which the carrier aggregation is applicable, the eNB etc. uses the carrier aggregation in communication with the UE etc. However, the eNB etc. determines whether or not to apply the carrier aggregation only by using information sent and received to and from the UE etc. Therefore, there is a problem that the carrier aggregation is applied to the UE etc. even when application of the carrier aggregation is not unauthorized under subscriber contract conditions, usage conditions and the like of that UE etc..

### Summary of Invention

The present invention provides a communication system, a base station and a method as set out in the appended independent claims. Optional features are disclosed in the appended dependent claims.

A method of a communication system according to a first exemplary aspect of the present invention comprises sending information on carrier aggregation in communication with a mobile terminal from a server that manages subscriber information of the mobile terminal from a server that manages subscriber information of the mobile terminal to a mobility management apparatus, wherein the subscriber information includes information indicating whether the mobile terminal can perform carrier aggregation; sending the information on carrier aggregation from the mobility management apparatus to a base station; and checking whether or not to apply carrier aggregation to the communication with the mobile terminal based on the information on carrier aggregation received by the base station.

A communication system according to a second exemplary aspect of the present invention comprises: a base station that connects to a mobile terminal; a mobility management apparatus that performs mobility management of the mobile terminal; and a server that manages subscriber information of the mobile terminal, wherein the subscriber information includes information indicating whether the mobile terminal can perform carrier aggregation; wherein the server sends information on carrier aggregation in communication with the mobile terminal to the mobility management apparatus, wherein the mobility management apparatus sends the information on carrier aggregation to the base station, and wherein the base station checks whether or not to apply carrier aggregation to the communication with the mobile terminal based on the information on carrier aggregation.

A base station according to a third exemplary aspect of the present invention is a base station comprising means for connecting to a mobile terminal, and means for connecting to a mobility management apparatus, wherein the base station receives information on carrier aggregation in communication with the mobile terminal from a server which manages subscriber information of the mobile terminal via the mobility management apparatus, wherein the subscriber information is information indicating whether the mobile station can perform carrier aggregation, and wherein the base station checks whether or not to apply carrier aggregation to the communication with the mobile terminal based on the information on carrier aggregation.

### Brief Description of Drawings

Fig. 1 is a block diagram of a communication system .
Fig. 2 is a block diagram of a communication system .
Fig. 3 is a block diagram of an MME
Fig. 4 is a block diagram of an eNB.
Fig. 5 is a view showing a flow of an Attach process .
Fig. 6 is a view illustrating an Initial Context Setup Request message .
Fig. 7 is a view illustrating an RRC Connection Reconfiguration/ NAS:Attach Accept message.
Fig. 8 is a view showing a flow of a UE triggered Service Request process .
Fig. 9 is a view showing a flow of a Network triggered Service Request process .
Fig. 10 is a block diagram of a communication system
Fig. 11 is a view showing a flow of an Attach process .
Fig. 12 is a block diagram of a UE.

### Description of Embodiments

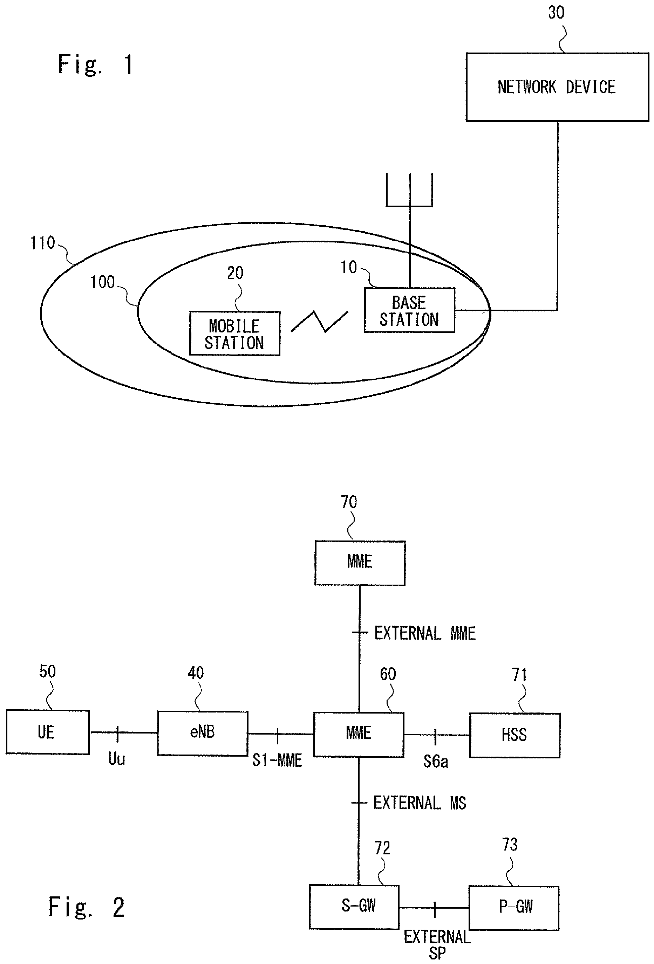

Techniques are described hereinafter with reference to the drawings. First, a configuration example of a communication system is described hereinafter with reference to Fig. 1. The communication system in Fig. 1 includes a base station 10, a mobile station (mobile terminal) 20, and a network device 30. The base station 10 uses a plurality of frequency bands and forms a cell with a different communication range for each of the frequency bands. For example, the base station 10 forms a cell 100 and a cell 110. A frequency band (frequency band A) that is used in the cell 100 is different from a frequency band (frequency band B) that is used in the cell 110.

It is assumed that the mobile station 20 is located concurrently in the cell 100 and the cell 110. In other words, it is assumed that the mobile station 20 is located in the area where the cell 100 and the cell 110 overlap. In this case, the base station 10 wirelessly communicates with the mobile station 20. For example, the base station 10 may communicate with the mobile station 20 by using LTE, which is the communication standard defined in the 3GPP, or may communicate with the mobile station 20 by using another communication standard.

The network device 30 sends, to the base station 10, information to be used for determining the frequency band to be used in wireless communications with the mobile station 20. The information to be used for determining the frequency band to be used may be, for example, information indicating whether both the frequency band A and the frequency band B can be used, only the frequency band A can be used, or only the frequency band B can be used when communicating with the mobile station 20.

As described above, with using the communication system in Fig. 1, the base station 10 can determine whether or not to use a plurality of frequency bands in wireless communications with the mobile station 20 by using the information sent from the network device 30. Therefore, a mobile telecommunications carrier that manages the base station 10 and the network device 30 can determine whether or not to perform communications using a plurality of frequency bands for each mobile station 20; that is, whether or not to apply the carrier aggregation per mobile station 20. A mobile telecommunications carrier can thereby appropriately determine whether the carrier aggregation can be applied or not per mobile station 20.

A configuration example of a communication system according to an embodiment of the present invention is described hereinafter with reference to Fig. 2. The communication system in Fig. 2 includes an eNB 40, an UE 50, an MME (Mobility Management Entity) 60, an MME 70, an HSS (Home Subscriber Server) 71, an S-GW (Serving-Gateway) 72, and a P-GW (Packet Data Network Gateway) 73. The eNB 40 is connected to the UE 50 through a Uu interface.

The MME 60 accommodates the eNB 40 through an S1-MME interface. Further, the MME 70 may accommodate another eNB which is different from the eNB 40. The MME 60 and the MME 70 perform UE mobility management, authentication, user data transfer path setting and the like. Further, the MME 60 is connected to the MME 70 through an external MME interface.

The HSS 71 manages subscriber information of the UE 50. For example, the subscriber information includes static information such as contract information between the UE 50 and a mobile telecommunications carrier and dynamic information such as position information of the UE 50. The static information is information that is not frequently modified, and the dynamic information is information that is more frequently modified compared with the static information. The HSS 71 sends the subscriber information about the UE 50 to the MME 60 through an S6a interface when the MME 60 performs, for example, authentication of the UE 50.

The S-GW 72 performs transmission of user data. The S-GW 72 is connected to the MME 60 through an external MS interface, and sends and receives control data. The P-GW 73, like the S-GW 72, performs transmission of user data. Further, the P-GW 73 performs allocation of an IP address or the like for the UE 50. The P-GW 73 is connected to the S-GW 72 through an external SP interface, and sends and receives control data. The P-GW 73 may be connected to an external network, the Internet or the like (not shown) through another interface.

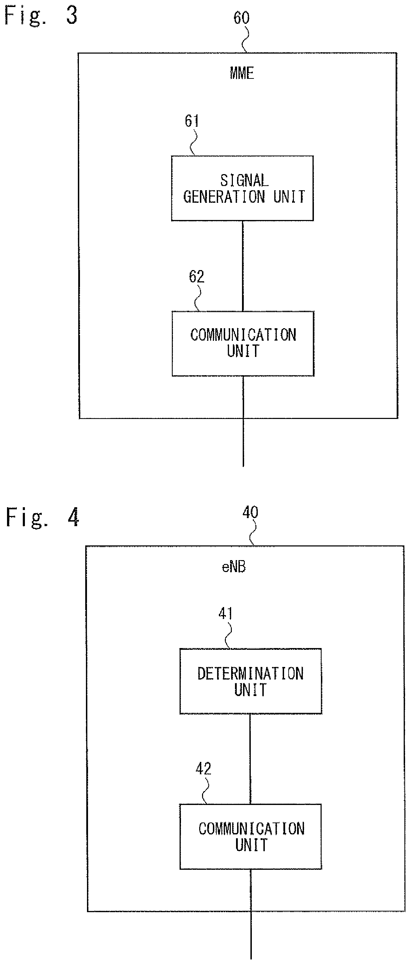

A configuration example of the MME 60 is described hereinafter with reference to Fig. 3. The MME 60 includes a signal generation unit 61 and a communication unit (sending and receiving unit) 62. The signal generation unit 61 generates a signal that contains information about whether the eNB 40 applies the carrier aggregation or not in wireless communications with the UE 50. To be specific, the MME 60 acquires the subscriber information about the UE 50 from the HSS 71 through the communication unit 62. The subscriber information about the UE 50 contains information about whether or not to apply the carrier aggregation in wireless communications with the UE 50. The signal generation unit 61 sends the generated signal to the eNB 40 through the communication unit 62.

The information about whether or not to apply the carrier aggregation which is contained in the subscriber information may be, for example, contract information about whether the UE 50 has applied for using the carrier aggregation or not. Further, the information about whether or not to apply the carrier aggregation which is contained in the subscriber information may be for example, information about the communication traffic capacity available for the UE 50 according to the contract. When the available communication traffic capacity according to the contract of the UE 50 is a large capacity that exceeds a predetermined threshold, the eNB 40 may determine to apply the carrier aggregation in communication with the UE 50, and when it is a capacity that falls below a predetermined threshold, the eNB 40 may determine not to apply the carrier aggregation in communication with the UE 50.

Further, the information about whether or not to apply the carrier aggregation which is contained in the subscriber information may be information about a service which the UE 50 has a contract for. For example, the eNB 40 may determine to apply the carrier aggregation in communication with the UE 50 when high-capacity communications are required for a service which the UE 50 has a contract for. Further, the eNB 40 may determine not to apply the carrier aggregation when the UE 50 subscribes to a voice service only. Furthermore, when the UE 50 subscribes to a premium contract or the like at a higher fee than that of a basic contract, the eNB 40 may allocate a frequency that is more suitable for high-speed communications and high-capacity communications as the frequency band to be allocated to the carrier aggregation. Further, the information about whether or not to apply the carrier aggregation which is contained in the subscriber information may be information that combines pieces of subscriber information related to the UE 50 managed by the HSS 71.

Further, the information about whether or not to apply the carrier aggregation which is contained in the subscriber information may be information about whether or not to subscribe to MVNO (Mobile Virtual Network Operator). For example, the eNB 40 may determine not to apply the carrier aggregation when the UE 50 subscribes to the MVNO, and the eNB 40 may determine to apply the carrier aggregation when the UE 50 subscribes to the MVNO.

Further, the information about whether or not to apply the carrier aggregation which is contained in the subscriber information may be information about whether the UE 50 is under roaming or not. For example, the eNB 40 may determine not to apply the carrier aggregation when the UE 50 is under roaming. For example, the MME 60 determines to allow roaming of the UE 50 when a roaming-partner HSS, which is in a roaming source, is set, and determines not to allow roaming of the UE 50 when a roaming-partner HSS is not set. Alternatively, the MME 60 determines to allow roaming of the UE 50 when it is set to allow roaming of the UE 50 in the subscriber information, and the MME 60 determines not to allow roaming of the UE 50 when it is not set to allow roaming of the UE 50 in the subscriber information.

A configuration example of the eNB 40 according to an embodiment of the present invention is described hereinafter with reference to Fig. 4. The eNB 40 includes a determination unit 41 and a communication unit (sending and receiving unit) 42. The determination unit 41 determines whether or not to apply the carrier aggregation in wireless communications with the UE 50 by using information sent from the MME 60. In other words, the determination unit 41 determines whether or not to apply the carrier aggregation per UE by using information sent from the MME 60.

When the contract information about whether the UE 50 has applied for using the carrier aggregation or not is sent from the MME 60, the determination unit 41 determines whether or not to apply the carrier aggregation to the UE 50 according to the details of the contract information.

The determination unit 41 may previously set a threshold in preparation for the case where information about the communication traffic capacity available for the UE 50 according to the contract is sent from the MME 60. The determination unit 41 may determine whether or not to apply the carrier aggregation to the UE 50 depending on whether the communication traffic capacity available for the UE 50 according to the contract exceeds a preset threshold or not. The determination unit 41 may previously set, for each service, whether it is the service to which the carrier aggregation is applied or not in preparation for the case where information about the service for which the UE 50 has a contract is sent from the MME 60. The determination unit 41 may determine whether or not to apply the carrier aggregation to the UE 50 depending on whether the service to which the carrier aggregation is applied is contained in the information about the service.

Further, when the determination unit 41 determines to apply the carrier aggregation in communication with the UE 50, it may determine the frequency band and the frequency width to be used by the communication unit 42. The determination unit 41 may determine to use the 800MHz frequency band and the 2.4GHz frequency band as the frequency band, for example. When applying the carrier aggregation, the determination unit 41 selects two or more frequency bands from a plurality of frequency bands available for the eNB 40. Further, the determination unit 41 may determine 20MHz or the like as the frequency width. The determination unit 41 may determine the total of frequency widths to be used in a plurality of frequency bands or may determine a frequency width to be used in each frequency band.

The determination unit 41 may previously specify the frequency bands that are available between the eNB 40 and the UE 50 in communication with the UE 50. Alternatively, the determination unit 41 may previously specify the frequency bands that are available between the eNB 40 and the UE 50 according to the place where the UE 50 is located.

The communication unit 42 wirelessly communicates with the UE 50 by using the frequency band and the frequency width specified by the determination unit 41. Further, the communication unit 42 may send and receive data to and from the MME 60 also.

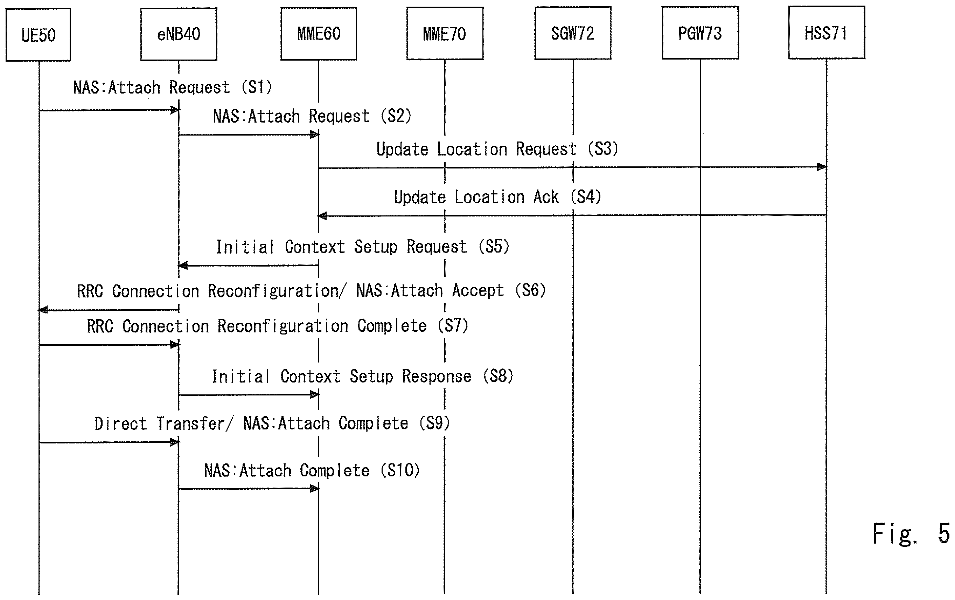

The flow of an Attach process according to an embodiment of the present invention is described hereinafter with reference to Fig. 5. First, the UE 50 sends a NAS (Non Access Stratum):Attach Request message to the eNB 40 (S1). The NAS:Attach Request message is sent when the UE 50 transitions from the power-off state to the power-on state, for example. The NAS:Attach Request message is used in the protocol called NAS, which is specified between a UE and a core network device. The core network device is an MME, for example.

Next, the eNB 40 transfers the NAS:Attach Request message sent from the UE 50 to the MME 60 (S2). The MME 60 receives the NAS:Attach Request message sent from the UE 50 and then sends an Update Location Request message to the HSS 71 (S3). The MME 60 sends the Update Location Request message to the HSS 71 in order to acquire subscriber information from the HSS 71. For example, the MME 60 sends the Update Location Request message to the HSS 71 by setting an identifier for identifying the UE 50.

Then, the HSS 71 sends an Update Location Ack message to the MME 60 as a response message to the Update Location Request message (S4). The HSS 71 sends the Update Location Ack message to which the subscriber information of the UE 50 is set to the MME 60.

The subscriber information that is sent from the HSS 71 to the MME 60 may be contract information about whether the UE 50 has applied for using the carrier aggregation or not, contract information about the communication traffic capacity available for the UE 50 according to the contract, or contract information about the service for which the UE 50 has a contract.

Further, the HSS 71 may indicate the frequency band in the case where the eNB 40 uses the carrier aggregation in communication with the UE 50 by using SPID (Subscriber ProfileID for RAT/ frequency priority) indicating the priority of a communication method to be used. For example, the priority of each of communication methods LTE (E-UTRAN), 3G (UTRAN) and 2G (GERAN) is specified by the SPID. The eNB 40 determines a communication method to be used according to the priority specified by the SPID.

The HSS 71 may specify, by the SPID, the use of the communication methods LTE and 3G as the highest priority, for example. By setting the SPID in this manner, the eNB 40 can determine to carry out the carrier aggregation by using the frequency band used in LTE and the frequency band used in 3G when communicating with the UE 50. A combination of various communication methods may be set to the SPID, and, for example, the use of LTE and an LTE communication method may be set as the highest priority. In this case, it is specified to carry out the carrier aggregation by combining two frequency bands that are used in LTE.

Then, the MME 60 extracts information to be used for the eNB 40 to determine whether the carrier aggregation is applicable or not from the subscriber information set to the Update Location Ack message. The MME 60 sets the extracted information to an Initial Context Setup Request message. The MME 60 sends, to the eNB 40, the Initial Context Setup Request message to which the information to be used for the eNB 40 to determine whether the carrier aggregation is applicable or not is set(S5).

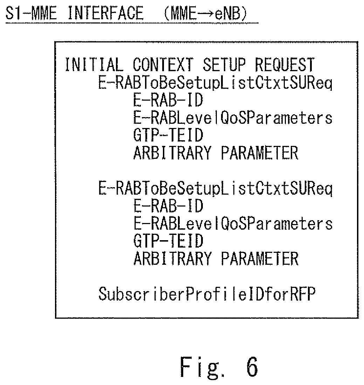

The Initial Context Setup Request message is described hereinafter with reference to Fig. 6. The MME 60 sends the Initial Context Setup Request message to the eNB 40 through the S1-MME interface. The Initial Context Setup Request message indicates a parameter to be set for each bearer that is set in the UE 50. For example, in the case where the UE 50 sets two bearers, two E-RABToBeSetupListCtxtSUReq are set as shown in Fig. 6. E-RAB-ID or the like is set in the E-RABToBeSetupListCtxtSUReq.

The MME 60 may set the information to be used for the eNB 40 to determine whether the carrier aggregation is applicable or not as an arbitrary parameter described for GTP(General Packet Radio Service Tunneling Protocol)-TEID(Tunnel Endpoint Identifier). To be specific, the MME 60 may set the contract information, the information indicated by the SPID or the like as an arbitrary parameter to be set for each bearer.

Referring back to Fig. 5, the eNB 40 receives the Initial Context Setup Request message, and determines whether or not to apply the carrier aggregation in communication with the UE 50. The eNB 40 sends, to the UE 50, an RRC(Radio Resource Control) Connection Reconfiguration/ NAS:Attach Accept message that reflects the determination result as to whether or not to apply the carrier aggregation (S6).

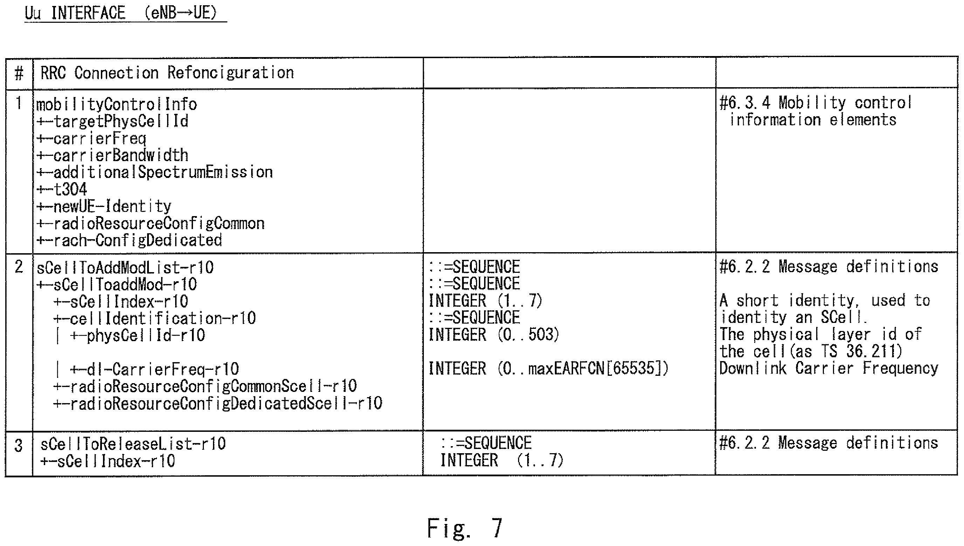

The RRC Connection Reconfiguration/ NAS:Attach Accept message is described hereinafter with reference to Fig. 7. The RRC Connection Reconfiguration/ NAS:Attach Accept message in Fig. 7 indicates that the Primary cell that is set in #1 and the Secondary cell set that is in #2 are specified. For example, the Primary cell may be the cell 100 in Fig. 1, and the Secondary cell may be the cell 110 in Fig. 1. Fig. 7 shows that the eNB 40 sets the Primary cell and the Secondary cell and thereby causes the carrier aggregation to operate in communication with the UE 50. In the case of applying the carrier aggregation using three or more frequency bands in communication with the UE 50, the eNB 40 may set three or more cells.

The eNB 40 specifies carrierFreq in mobilityControlInfo of #1 and thereby specifies the frequency to be used in the Primary cell. Further, the eNB 40 specifies dl-CarrierFreq-r10 in sCellToAddModList-r10 of #2 and thereby specifies the frequency to be used in the Secondary cell. Furthermore, the eNB 40 may specify the frequency width by specifying carrierBandwidth.

The frequency band, the frequency width and the like to be used when the eNB 40 communicates with the UE 50 by using the carrier aggregation may be predetermined between the UE 50 and the eNB 40. For example, after the eNB 40 receives the NAS:Attach Request message in Step S1, it may send a UE Capability Enquiry message to the UE 50 in order to make inquiries about information such as the frequency band and the frequency width to be used in the carrier aggregation. As a response to the UE Capability Enquiry message, the UE 50 may send a UE Capability Information message where the frequency band, the frequency width and the like to be used in the carrier aggregation are specified. It is assumed that sending and receiving of the UE Capability Enquiry message and the UE Capability Information message between the UE 50 and the eNB 40 have completed before the eNB 40 sends the RRC Connection Reconfiguration/ NAS:Attach Accept message in Step S6.

Further, in the case where the eNB 40 determines not to use the carrier aggregation, only #1 indicating the setting of the Primary cell may be set in Fig. 7.

Referring back to Fig. 5, the UE 50 sends an RRC Connection Reconfiguration Complete message to the eNB 40 as a response message to the RRC Connection Reconfiguration/ NAS:Attach Accept message (S7).

Then, the eNB 40 sends an Initial Context Setup Response message to the MME 60 as a response message to the Initial Context Setup Request message (S8). After that, the UE 50 sends a Direct Transfer/ NAS:Attach Complete message to the eNB 40 in order to notify the completion of processing related to Attach Request (S9). The eNB 40 then sends a NAS:Attach Complete message to the MME 60 (S10).

As described above, with using the communication system according to an embodiment of the present invention, the MME, which is the core network device, can send, to the eNB 40, the information to be used for determining whether the carrier aggregation is applicable or not. The eNB can determine whether the carrier aggregation is applicable or not per UE by using the information sent from the MME. A mobile telecommunications carrier can thereby flexibly set the carrier aggregation per UE.

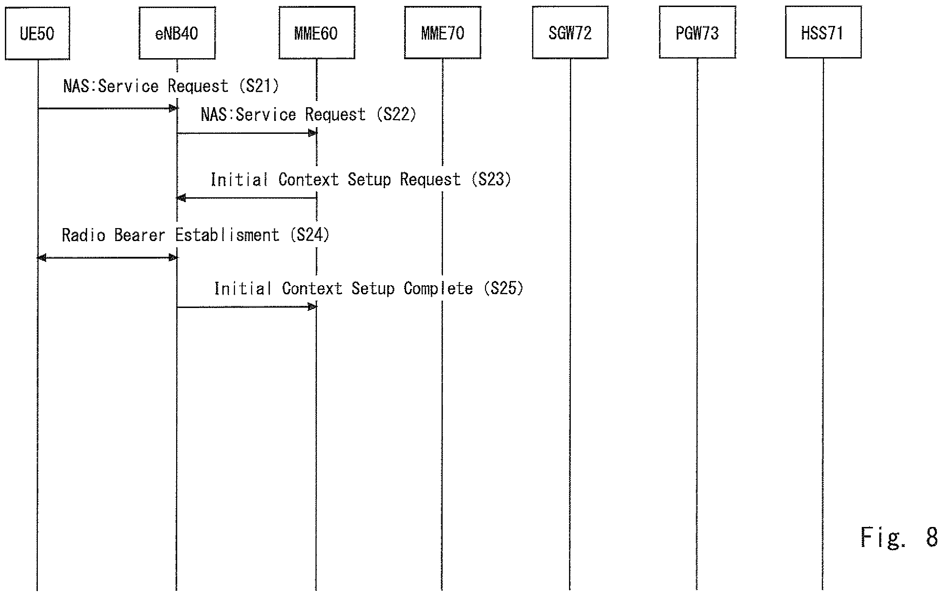

The flow of a UE triggered Service Request process is described hereinafter with reference to Fig. 8. A precondition for performing the UE triggered Service Request process is that a bearer is previously set in the UE 50 and radio resources are released after the lapse of a specified period of time. In other words, the UE triggered Service Request process is a process that the UE 50 requests the resetting of a bearer, which is, the activation of a bearer.

First, the UE 50 sends a NAS:Service Request message to the eNB 40 (S21). For example, the NAS:Service Request message is sent to the eNB 40 when an arbitrary operation is performed in the UE 50 in the state where the Attach process of the UE 50 has completed. Next, the eNB 40 transfers the received NAS:Service Request message to the MME 60 (S22).

Then, the MME 60 sends, to the eNB 40, an Initial Context Setup Request message that specifies a bearer to be reset in the UE 50 (S23). The MME 60 specifies the bearer that has been set in the Attach process of the UE 50 as the bearer to be reset, for example. At this time, the MME 60 sets the same information as the information that has been set to the arbitrary parameter in Step S5 of Fig. 5 to the Initial Context Setup Request message in Step S23.

The eNB 40 receives the Initial Context Setup Request message to which the information to be used for determining whether the carrier aggregation is applicable or not is set in Step S23 and then determines whether or not to apply the carrier aggregation in communication with the UE 50.

Then, the eNB 40 establish a radio bearer with the UE 50 (S24). At this time, when it is determined to use the carrier aggregation, the eNB 40 may send, to the UE 50, information about the frequency band, the frequency width and the like to be used in the carrier aggregation.

After that, the eNB 40 sends an Initial Context Setup Complete message as a response message to the Initial Context Setup Request message (S25).

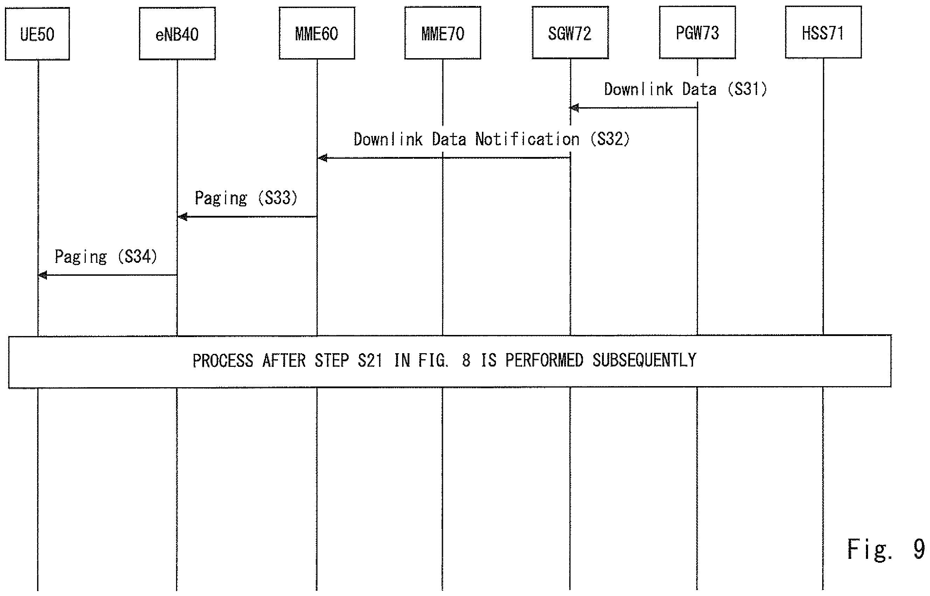

Hereinafter, the flow of a Network triggered Service Request process is described hereinafter with reference to Fig. 9. The Network triggered Service Request process is performed when an incoming message is sent to the UE 50. First, the P-GW 73 sends, to the S-GW 72, Downlink Data that is addressed to the UE 50 (S31). Next, the S-GW 72 sends a Downlink Data Notification message to the MME 60 in order to notify the MME 60 that the Downlink Data addressed to the UE 50 has been sent (S32). Then, the MME 60 sends a Paging message to the eNB 40 (S33), and the eNB 40 performs a Paging process (S34). After the Paging process in Step S34, the process of Steps S21 to S25 in Fig. 8 is performed.

As described above, in the UE triggered Service Request process and the Network triggered Service Request process that are performed after the Attach process is completed also, the eNB 40 can determine whether the carrier aggregation is applicable or not in the same way as in the above embodiment.

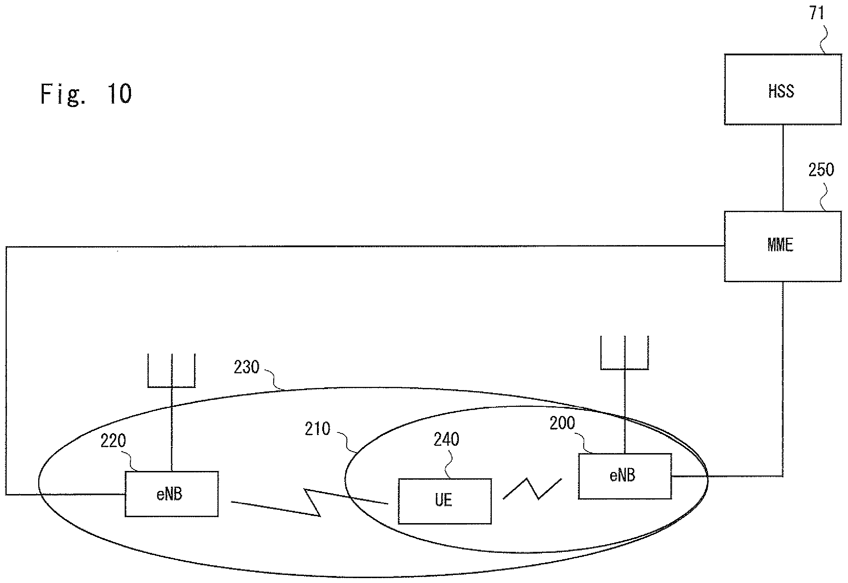

A configuration example of a communication system is described hereinafter with reference to Fig. 10. The communication system in Fig. 10 includes an eNB 200, an eNB 220, a UE 240, an MME 250 and an HSS 71. The eNB 200 forms a cell 210. The eNB 220 forms a cell 230. The frequency band that is used in the cell 210 is different from the frequency band that is used in the cell 230. The UE 240 is located concurrently in the cell 210 and the cell 230. In other words, the UE 240 is located at the position where the cell 210 and the cell 230 overlap. Further, the MME 250 accommodates the eNB 200 and the eNB 220.

In the configuration of the communication system as shown in Fig. 10, the UE 240 may carry out the carrier aggregation by using the frequency band that is used in the cell 210 and the frequency band that is used in the cell 230.

Then MME 250 receives the subscriber information from the HSS 71 or the like, and it may then determine whether or not to apply the carrier aggregation to the UE 240 based on the received subscriber information, for example. Specifically, the MME 250 may include the determination unit 41 in the eNB 40.

For example, when the MME 250 determines to use the carrier aggregation in wireless communications with the UE 240 by using the subscriber information sent from the HSS 71, it may send an Initial Context Setup Request message to the eNB 200 and the eNB 220 that form cells where the UE 240 is located. The UE 240 may receive an RRC Connection Reconfiguration/ NAS:Attach Accept message that specifies a frequency to be used from both of the eNB 200 and the eNB 220. The UE 240 can thereby carry out the carrier aggregation by using the frequency band that is used in the cell 210 and the frequency band that is used in the cell 230.

As described above, the UE 240 can use the carrier aggregation by simultaneously communicating with a plurality of eNBs using different frequency bands, in addition to the case where one eNB uses a plurality of frequency bands. Further, the MME 250 can determine whether the carrier aggregation using a plurality of eNBs is applicable or not by using the subscriber information sent from the HSS 71.

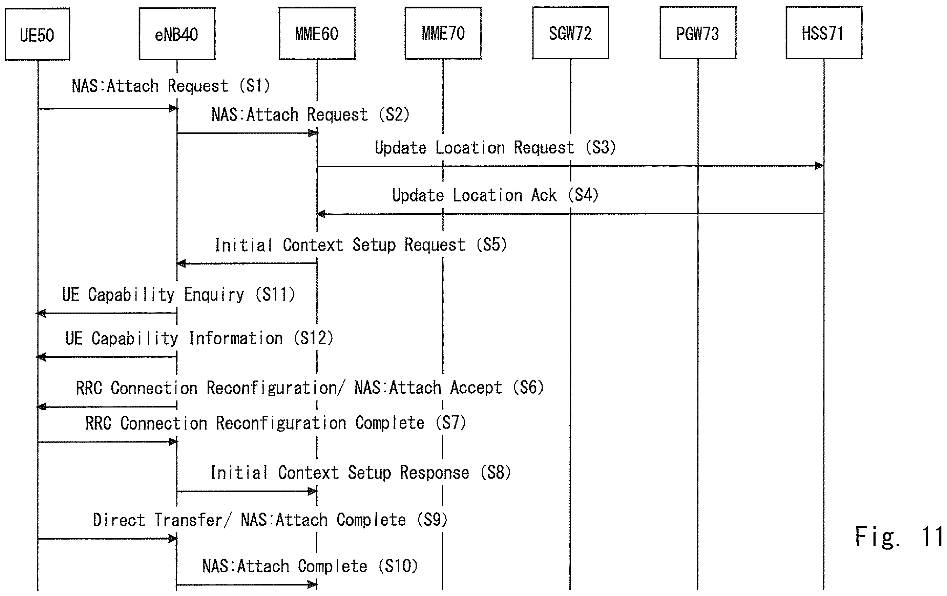

The flow of an Attach process is described hereinafter with reference to Fig. 11. Fig. 11 shows the flow of a process where Step S11 and Step S12 are added between Step S5 and Step S6 in Fig. 5. In Fig. 11, the process which is common to that in Fig. 5 is not redundantly described.

In Step S11, the eNB 40 receives an Initial Context Setup Request message and then sets information to be used for determining whether the carrier aggregation is applicable or not to an arbitrary parameter of a UE Capability Enquiry message and sends it to the UE 50 (S11).

The UE 50 receives the UE Capability Enquiry message and determines whether or not to apply the carrier aggregation by using the information sent from the eNB 40 and sends, to the eNB 40, a UE Capability Information message that reflects the determination result as to whether or not to apply the carrier aggregation (S12). The eNB 40 receives the UE Capability Information message and sends, to the UE 50, an RRC Connection Reconfiguration/ NAS:Attach Accept message that reflects the determination result as to whether or not to apply the carrier aggregation (S6).

As described above, by performing the Attach process in Fig. 11, the UE 50 can make determination about whether or not to apply the carrier aggregation.

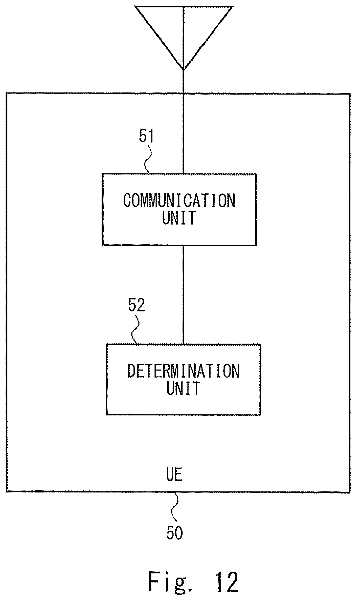

Further, the UE 50 may include a communication unit 51 and a determination unit 52 as shown in Fig. 12. The communication unit 51 receives information to be used for determining the frequency band to be used in wireless communications with the eNB 40. Further, by using the received information, the determination unit 52 determines whether or not to perform wireless communications with the eNB 40 by using two or more frequency bands.

The present invention may be implemented by causing a processor such as a CPU (Central Processing Unit) to execute a computer program to perform processing in the core network device (e.g., MME), the base station (e.g., eNB) and the mobile station (e.g., UE).

In the above example, the program can be stored and provided to the computer using any type of non-transitory computer readable medium. The non-transitory computer readable medium includes any type of tangible storage medium. Examples of the non-transitory computer readable medium include magnetic storage media (such as floppy disks, magnetic tapes, hard disk drives, etc.), optical magnetic storage media (e.g. magneto-optical disks), CD-ROM (Read Only Memory), CD-R , CD-R/W, DVD-ROM (Digital Versatile Disc Read Only Memory), DVD-R (DVD Recordable)), DVD-R DL (DVD-R Dual Layer)), DVD-RW (DVD ReWritable)), DVD-RAM), DVD+R), DVR+R DL), DVD+RW), BD-R (Blu-ray (registered trademark) Disc Recordable)), BD-RE (Blu-ray (registered trademark) Disc Rewritable)), BD-ROM), and semiconductor memories (such as mask ROM, PROM (Programmable ROM), EPROM (Erasable PROM), flash ROM, RAM (Random Access Memory), etc.). The program may be provided to a computer using any type of transitory computer readable medium. Examples of the transitory computer readable medium include electric signals, optical signals, and electromagnetic waves. The transitory computer readable medium can provide the program to a computer via a wired communication line such as an electric wire or optical fiber or a wireless communication line.

The invention is solely defined by the appended claims 1-11.

### Reference Signs List

- 10: BASE STATION
- 20: MOBILE STATION
- 30: NETWORK DEVICE
- 40: eNB
- 41: DETERMINATION UNIT
- 42: COMMUNICATION UNIT
- 50: UE
- 51: COMMUNICATION UNIT
- 52: DETERMINATION UNIT
- 60: MME
- 61: SIGNAL GENERATION UNIT
- 62: COMMUNICATION UNIT
- 70: MME
- 71: HSS
- 72: S-GW
- 73: P-GW
- 100: CELL
- 110: CELL
- 200: eNB
- 210: CELL
- 220: eNB
- 230: CELL
- 240: UE
- 250: MME

## Claims

1. A method of a communication system comprising:
sending information on carrier aggregation in communication with a mobile terminal (20) from a server (71) that manages subscriber information of the mobile terminal (20) to a mobility management apparatus (60);
wherein the subscriber information includes information indicating whether the mobile terminal can perform carrier aggregation;
sending the information on carrier aggregation from the mobility management apparatus (60) to a base station (10); and
checking by the base station whether or not to apply carrier aggregation to the communication with the mobile terminal (20) based on the information on carrier aggregation received by the base station (10).

2. The method according to claim 1,
wherein the base station (10) checks whether or not to use a plurality of frequency bands in the communication with the mobile terminal (20) based on the information on carrier aggregation.

3. The method according to claim 1 or 2,
wherein the mobility management apparatus comprises a mobility management entity, MME (60).

4. The method according to any one of claims 1 to 3,
wherein the base station (10) comprises an evolved NodeB, eNB (40).

5. A communication system comprising:
a base station (10) that connects to a mobile terminal (20);
a mobility management apparatus (60) that performs mobility management of the mobile terminal; and
a server (71) that manages subscriber information of the mobile terminal,
wherein the subscriber information includes information indicating whether the mobile terminal can perform carrier aggregation;
wherein the server (71) sends information on carrier aggregation in communication with the mobile terminal to the mobility management apparatus (60),
wherein the mobility management apparatus (60) sends the information on carrier aggregation to the base station (10), and
wherein the base station (10) checks whether or not to apply carrier aggregation to the communication with the mobile terminal (20) based on the information on carrier aggregation.

6. The communication system according to claim 5,
wherein the base station (10) checks whether or not to use a plurality of frequency bands in the communication with the mobile terminal (20) based on the information on carrier aggregation.

7. The communication system according to of claim 5 or 6,
wherein the mobility management apparatus (60) comprises a mobility management entity, MME (60).

8. The communication system according to any one of claims 5 to 7,
wherein the base station comprises an evolved NodeB, eNB (40).

9. A base station (10) comprising:
means for connecting to a mobile terminal (20); and
means for connecting to a mobility management apparatus (60),
wherein the base station (10) receives information on carrier aggregation in communication with the mobile terminal (20) from a server (71) which manages subscriber information of the mobile terminal (20) via the mobility management apparatus (60), wherein the subscriber information includes information indicating whether the mobile terminal can perform carrier aggregation; and
wherein the base station (10) checks whether or not to apply carrier aggregation to the communication with the mobile terminal (20) based on the information on carrier aggregation.

10. The base station (10) according to claim 9,
wherein the base station (10) checks whether or not to use a plurality of frequency bands in the communication with the mobile terminal (20) based on the information on carrier aggregation.

11. The base station (10) according to claim 9 or 10,
wherein the base station (10) comprises an evolved NodeB, eNB (40).

## Patentansprüche

1. Verfahren eines Kommunikationssystems aufweisend:
Senden von Information, die eine Trägeraggregation in einer Kommunikation mit einem mobilen Endgerät (20) betrifft, von einem Server (71), der Teilnehmerinformation des mobilen Endgeräts (20) verwaltet, zu einer Mobilitätsverwaltungsvorrichtung (60);
wobei die Teilnehmerinformation Information aufweist, die angibt, ob das mobile Endgerät eine Trägeraggregation durchführen kann;
Senden der Trägeraggregationsinformation aus der Mobilitätsverwaltungsvorrichtung (60) zu einer Basisstation (10); und
Prüfen durch die Basisstation, ob auf Basis der von der Basisstation (10) empfangenen Trägeraggregationsinformation eine Trägeraggregation auf die Kommunikation mit dem mobilen Endgerät (20) anzuwenden ist oder nicht.

2. Verfahren nach Anspruch 1, wobei die Basisstation (10) prüft, ob auf Basis der Trägeraggregationsinformation mehrere Frequenzbänder in der Kommunikation mit dem mobilen Endgerät (20) zu verwenden sind oder nicht.

3. Verfahren nach Anspruch 1 oder 2, wobei die Mobilitätsverwaltungsvorrichtung eine Mobilitätsverwaltungsentität, MME, (60) aufweist.

4. Verfahren nach einem der Ansprüche 1 bis 3, wobei die Basisstation (10) einen entwickelten Knoten B, eNB, (40) aufweist.

5. Kommunikationssystem aufweisend:
eine Basisstation (10), die sich mit einem mobilen Endgerät (20) verbindet;
eine Mobilitätsverwaltungsvorrichtung (60), die eine Mobilitätsverwaltung des mobilen Endgeräts durchführt; und
einen Server (71), der Teilnehmerinformation des mobilen Endgeräts verwaltet,
wobei die Teilnehmerinformation Information aufweist, die angibt, ob das mobile Endgerät eine Trägeraggregation durchführen kann;
wobei der Server (71) Information, die Trägeraggregation in einer Kommunikation mit dem mobilen Endgerät betrifft, zu der Mobilitätsverwaltungsvorrichtung (60) sendet,
wobei die Mobilitätsverwaltungsvorrichtung (60) die Trägeraggregationsinformation zu der Basisstation (10) sendet, und
wobei die Basisstation (10) prüft, ob auf Basis der Trägeraggregationsinformation eine Trägeraggregation auf die Kommunikation mit dem mobilen Endgerät (20) anzuwenden ist oder nicht.

6. Kommunikationssystem nach Anspruch 5, wobei die Basisstation (10) prüft, ob auf Basis der Trägeraggregationsinformation mehrere Frequenzbänder in der Kommunikation mit dem mobilen Endgerät (20) zu verwenden sind oder nicht.

7. Kommunikationssystem nach Anspruch 5 oder 6, wobei die Mobilitätsverwaltungsvorrichtung eine Mobilitätsverwaltungsentität, MME, (60) aufweist.

8. Kommunikationssystem nach einem der Ansprüche 5 bis 7, wobei die Basisstation einen entwickelten Knoten B, eNB, (40) aufweist.

9. Basisstation (10) aufweisend:
Einrichtungen zum Verbinden mit einem mobilen Endgerät (20); und
Einrichtungen zum Verbinden mit einer Mobilitätsverwaltungsvorrichtung (60),
wobei die Basisstation (10) Information, die eine Trägeraggregation in einer Kommunikation mit dem mobilen Endgerät (20) betrifft, von einem Server (71), der Teilnehmerinformation des mobilen Endgeräts (20) verwaltet, über die Mobilitätsverwaltungsvorrichtung (60) empfängt,
wobei die Teilnehmerinformation Information aufweist, die angibt, ob das mobile Endgerät eine Trägeraggregation durchführen kann; und
wobei die Basisstation (10) prüft, ob auf Basis der Trägeraggregationsinformation eine Trägeraggregation auf die Kommunikation mit dem mobilen Endgerät (20) anzuwenden ist oder nicht.

10. Basisstation (10) nach Anspruch 9, wobei die Basisstation (10) prüft, ob auf Basis der Trägeraggregationsinformation mehrere Frequenzbänder in der Kommunikation mit dem mobilen Endgerät (20) zu verwenden sind oder nicht.

11. Basisstation (10) nach Anspruch 9 oder 10, wobei die Basisstation (10) einen entwickelten Knoten B, eNB, (40) aufweist.

## Revendications

1. Procédé d'un système de communication comprenant :
l'envoi d'informations sur une agrégation de porteuses en communication avec un terminal mobile (20) d'un serveur (71) qui gère des informations d'abonné du terminal mobile (20) à un appareil de gestion de mobilité (60) ;
dans lequel les informations d'abonné comportent des informations indiquant si le terminal mobile peut effectuer une agrégation de porteuses ;
l'envoi des informations sur une agrégation de porteuses de l'appareil de gestion de mobilité (60) à une station de base (10) ; et
la vérification par la station de base s'il faut appliquer ou non une agrégation de porteuses à la communication avec le terminal mobile (20) d'après les informations sur une agrégation de porteuses reçues par la station de base (10).

2. Procédé selon la revendication 1,
dans lequel la station de base (10) vérifie s'il faut utiliser ou non une pluralité de bandes de fréquence dans la communication avec le terminal mobile (20) d'après les informations sur une agrégation de porteuses.

3. Procédé selon la revendication 1 ou 2,
dans lequel l'appareil de gestion de mobilité comprend une entité de gestion de mobilité, MME (60).

4. Procédé selon l'une quelconque des revendications 1 à 3,
dans lequel la station de base (10) comprend un NœudB évolué, eNB (40).

5. Système de communication comprenant :
une station de base (10) qui se connecte à un terminal mobile (20) ;
un appareil de gestion de mobilité (60) qui effectue une gestion de mobilité du terminal mobile ; et
un serveur (71) qui gère des informations d'abonné du terminal mobile,
dans lequel les informations d'abonné comportent des informations indiquant si le terminal mobile peut effectuer une agrégation de porteuses ;
dans lequel le serveur (71) envoie des informations sur une agrégation de porteuses en communication avec le terminal mobile à l'appareil de gestion de mobilité (60),
dans lequel l'appareil de gestion de mobilité (60) envoie les informations sur une agrégation de porteuses à la station de base (10), et
dans lequel la station de base (10) vérifie s'il faut appliquer ou non une agrégation de porteuses à la communication avec le terminal mobile (20) d'après les informations sur une agrégation de porteuses.

6. Système de communication selon la revendication 5,
dans lequel la station de base (10) vérifie s'il faut utiliser ou non une pluralité de bandes de fréquence dans la communication avec le terminal mobile (20) d'après les informations sur une agrégation de porteuses.

7. Système de communication selon la revendication 5 ou 6,
dans lequel l'appareil de gestion de mobilité (60) comprend une entité de gestion de mobilité, MME (60).

8. Système de communication selon l'une quelconque des revendications 5 à 7,
dans lequel la station de base comprend un NœudB évolué, eNB (40).

9. Station de base (10) comprenant :
des moyens de connexion à un terminal mobile (20) ; et
des moyens de connexion à un appareil de gestion de mobilité (60),
dans laquelle la station de base (10) reçoit des informations sur une agrégation de porteuses en communication avec le terminal mobile (20) depuis un serveur (71) qui gère des informations d'abonné du terminal mobile (20) via l'appareil de gestion de mobilité (60), dans laquelle les informations d'abonné comportent des informations indiquant si le terminal mobile peut effectuer une agrégation de porteuses ; et
dans laquelle la station de base (10) vérifie s'il faut appliquer ou non une agrégation de porteuses à la communication avec le terminal mobile (20) d'après les informations sur une agrégation de porteuses.

10. Station de base (10) selon la revendication 9,
dans laquelle la station de base (10) vérifie s'il faut utiliser ou non une pluralité de bandes de fréquence dans la communication avec le terminal mobile (20) d'après les informations sur une agrégation de porteuses.

11. Station de base (10) selon la revendication 9 ou 10,
dans laquelle la station de base (10) comprend un NœudB évolué, eNB (40).
